# EUROPÄISCHE PATENTSCHRIFT

(11) **EP 2 274 637 B1**
(45) Veröffentlichungstag und Bekanntmachung des Hinweises auf die Patenterteilung: **28.08.2013**
(21) Anmeldenummer: 09768975.6
(22) Anmeldetag: 23.06.2009
(51) Int. Cl.: G01S 5/02, H04W 64/00, G01C 21/30

(54) **VORRICHTUNG UND VERFAHREN ZUM ZUORDNEN EINES AKTUELLEN MESSWERTS FÜR EINE GEOGRAPHISCHE POSITION ZU EINEM KARTENOBJEKT**
DEVICE AND METHOD FOR ALLOCATING A CURRENT MEASUREMENT VALUE FOR A GEOGRAPHIC POSITION TO A MAP OBJECT
DISPOSITIF ET PROCÉDÉ D'ATTRIBUTION D'UNE VALEUR DE MESURE RÉELLE D'UNE POSITION GÉOGRAPHIQUE À UN OBJET CARTOGRAPHIQUE

(30) Priorität: 27.06.2008 DE 102008030504
(43) Veröffentlichungstag der Anmeldung: 19.01.2011
(73) Patentinhaber: Fraunhofer-Gesellschaft zur Förderung der angewandten Forschung, 80686 München (DE)
(72) Erfinder: MEYER, Steffen, 91052 Erlangen (DE); HUPP, Jürgen, 90425 Nürnberg (DE); HAIMERL, Stephan, 92358 Seubersdorf (DE); ZAHONYI, Renata Kitti, London SW7 3HT (GB)
(74) Vertreter: Zinkler, Franz
(86) Internationale Anmeldenummer: PCT/EP2009/004524
(87) Internationale Veröffentlichungsnummer: WO 2009/156126

(56) Entgegenhaltungen:
- EP-A2- 1 022 578
- US-A- 6 023 653
- BAHL P ET AL: "RADAR: an in-building RF-based user location and tracking system", INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, vol. 2, 26 March 2000 (2000-03-26), pages 775-784, XP010376167, DOI: 10.1109/INFCOM.2000.832252 ISBN: 978-0-7803-5880-5

## Beschreibung

Die vorliegende Erfindung bezieht sich auf ein Konzept zum Zuordnen von geographischen Positionsmesswerten zu geographischen Karten bzw. zu Objekten derartiger Karten, wie es beispielsweise zur Verbesserung einer Genauigkeit solcher Positionsmesswerte eingesetzt werden kann.

Werden beim Abfahren oder Durchlaufen von Straßen bzw. Wegen intervallweise Messwerte für jeweilige geographische Positionen ermittelt, so ergeben sich dabei, je nach eingesetztem Verfahren, mehr oder weniger große Ungenauigkeiten. Das derzeit wohl am weitesten verbreitete Navigationssystem ist das globale Positionsbestimmungssystem (GPS = Global Positioning System). Nachdem vor einigen Jahren die Abschaltung einer künstlichen Signalverzerrung erfolgte, sind seitdem ohne größeren Aufwand Ortungsgenauigkeiten von 10 bis 15 Metern erreichbar. Dabei hängt die Ortungsgenauigkeit auch von der Anzahl der Satelliten ab, die zum Messzeitpunkt "gesehen" werden. Generell kann man sagen, dass die Messgenauigkeit mit der Anzahl von empfangenen Satelliten steigt.

Bewegt man sich jedoch in Stadtgebieten mit teilweise seitlich hoch bebauten Straßen oder engen Gassen, so kann es dazu kommen, dass Gebäude eine Sichtverbindung zu Satelliten abschatten und somit die durch GPS erreichbare Messgenauigkeit abnimmt. Werden per Satellitenpositionsbestimmungssystem gemessene geographische Rohdaten in geographische Stadt- oder Landkarten gelegt, so kann es zu relativ unplausiblen Ortsangaben kommen, die mit der tatsächlichen geographischen Position des Navigationsgeräts nur wenig zu tun haben. Insbesondere gilt dies, wenn es sich um enge Gassen und Fußwege handelt, wo selbst eine Genauigkeit von 10 bis 15 Metern schon zu unplausiblen Ergebnissen führen kann. Speziell bei Straßenkreuzungen kann es dann schwierig sein, zu entscheiden, welcher Straße ein ungenau gemessener Punkt zuzuordnen ist.

Daher werden oft mit Navigationssystemen gemessene geographische Rohdaten an Kartendaten angeglichen, damit beispielsweise ein Fahrer auf einem Display seines Fahrzeug-Navigationsgeräts plausible Positionsanzeigen erhält. Liegt die Genauigkeit der Positionsbestimmung beispielsweise gerade bei ca. 50 Metern und bewegt sich ein Fahrer mit seinem Fahrzeug gerade entlang einer Straße an einem Seeufer, so wäre es doch sehr verwirrend, wenn auf dem Display des Navigationsgeräts die Position des Fahrzeugs nicht auf der Straße, sondern im See angezeigt würde - auch wenn die Rohmesswerte eine (falsche) Position im See liefern. In solchen Fällen erkennt ein Navigationssystem, dass eine derartige Position für Anwendungen als Straßennavigationssystem äußerst unwahrscheinlich ist und korrigiert die gemessene geographische Position zur Anzeige in der geographischen Karte so, dass sie einer plausiblen Position beispielsweise auf einer Straße entspricht.

Aufgrund einer zunehmenden Verbreitung von drahtlosen Funknetzen, die beispielsweise auf dem WLAN-Standard (Wireless Local Area Network) basieren, bieten sich diese drahtlosen Netze als Basis für neue Lokalisierungsverfahren an. Bei WLAN-basierten Ortungssystemen kommt als Basisverfahren oft ein sogenanntes Received-Signal-Strength- (RSS-) Fingerprinting zum Einsatz. Dieses Verfahren basiert auf der Annahme, dass an einem aktuellen Ort empfangene bzw. empfangbare Signalstärken von Funksignalen mehrere Funkstationen den aktuellen Ort bzw. die aktuelle geographische Position eindeutig charakterisieren. Existiert eine Referenzdatenbasis, die für eine Anzahl von geographischen Referenzorten bzw. Referenzpositionen Senderkennungen von dort zu Referenzzeitpunkten empfangenen bzw. empfangbaren Funkstationen sowie die Signalstärken der entsprechenden Funksignale enthält, so kann aus einem Satz aktueller Messwerte (Senderkennungen und zugehörige Signalstärkewerte) auf die aktuelle Position geschlossen werden, indem ein Abgleich zwischen aktuell gemessenen Messwerten und den Referenzwerten der Datenbasis erfolgt. Dieser Abgleich bewertet für jeden Referenzpunkt, wie ähnlich dessen vorher aufgezeichnete Messwerte bzw. Referenzwerte zu den aktuellen Messwerten der aktuellen Position sind. Der oder die ähnlichsten Referenzpositionen bilden dann eine Basis für einen Schätzwert für den aktuellen Aufenthaltsort des mobilen Endgeräts.

Daraus wird klar, dass die Genauigkeit solcher WLANbasierter Ortungssysteme u.a. von der Qualität der Referenzpositionen in der Referenzdatenbasis abhängt. Für eine Referenzdatenbasis wird durch eine Referenzmessung die Signalstärke von einem zu einem Referenzmesszeitpunkt an einer Referenzposition empfangbaren Funksender experimentell ermittelt. Dadurch entsteht eine Datenbasis, die zu jeder Referenzposition, an der eine Referenzmessung durchgeführt wurde, eine Liste von Funksendern (Access Points) mit der jeweilig zugeordneten Empfangsfeldstärke und -Qualität enthält. Dabei werden die Referenzpositionen beispielsweise durch GPS-Geräte ermittelt. Die Genauigkeit solcher Messungen wurde oben bereits diskutiert.

Die Veröffentlichung : "RADAR: an in-building RF-based user location and tracking system", Bahl P; Padmanabhan V N , INFOCOM 2000. Nineteenth Annual Joint Conference of the IEEE Computer and Communications Societies. Proceedings. IEEE Tel Aviv, Israel 26-30, March 2000, Piscataway, NJ, USA, IEEE, US, Vol 2, Seiten 775 - 784, offenbart ein RF-basiertes Ortungssystem für Personen innerhalb von Gebäuden.

Daher ist es die Aufgabe der vorliegenden Erfindung, die Genauigkeit von Positionsmesswerten zu erhöhen, indem die gemessenen Positionsmesswerte durch Plausibilitätsbetrachtungen mit geographischen Karten abgeglichen werden.

Diese Aufgabe wird gelöst durch Vorrichtungen und Verfahren mit Merkmalen der unabhängigen Patentansprüche.

Die Erkenntnis der vorliegenden Erfindung besteht darin, dass zum Abgleich gemessener Positionswerte mit (digitalen) Kartendaten bzw. Kartenobjekten, wie z. B. Straßen oder Wegen, Wahrscheinlichkeitsmaße eingeführt werden, um aus den ungenauen Rohmesswerten erkennen zu können, wann beispielsweise ein Straßenwechsel von einer ersten Straße in eine zweite Straße erfolgt. Die Straßen stellen dabei Kartenobjekte dar. Zu den Kartenobjekten existieren natürlich genaue geographische Koordinaten. Wird nach dem erfindungsgemäßen Konzept ein geographischer Positionsrohmesswert einem Kartenobjekt zugeordnet, so bedeutet dies im Allgemeinen auch eine Aufwertung des Positionsrohmesswerts, dahingehend, dass seine Genauigkeit verbessert wird. Somit ist der verbesserte Positionsmesswert im Anschluss als Referenzposition eines Referenzmesspakets deutlich wertvoller für WLAN-basierte Ortung.

In die Bestimmung der Wahrscheinlichkeitsmaße geht beispielsweise eine Veränderung eines aktuell betrachteten Messpunkts zu wenigstens zwei letzten Messpunkten ein. Genauer gesagt wird beispielsweise eine Abweichung des aktuell betrachteten Messpunkts von einer (Ausgleichs-) Gerade betrachtet, die durch die wenigstens letzten beiden, bereits einem Kartenobjekt zugeordneten, Messpunkte gelegt wird. Dabei bedeuten die wenigstens letzten beiden zugeordneten Messpunkte also Messpunkte, die einem Kartenobjekt, wie beispielsweise einer Straße, einem Weg oder einem Gebäude, zugeordnet wurden.

Des Weiteren geht in die Bestimmung des Wahrscheinlichkeitsmaßes ein Abstand des aktuell betrachteten Positionsmesswerts zu dem in Frage kommenden Kartenobjekt, wie also z. B. einer Straße, ein.

Da es ja fraglich ist, ob der aktuell betrachtete Messwert einem ersten Kartenobjekt (z. B. Straße) oder einem zweiten Kartenobjekt (z. B. Querstraße) zugeordnet werden soll, geht in die Bestimmung der Wahrscheinlichkeitsmaße auch ein Abstand des aktuellen Messwerts zu einem nächst möglichen Schnittpunkt (z. B. Straßenkreuzung) des ersten Kartenobjekts mit dem zweiten Kartenobjekt ein.

Dazu schaffen Ausführungsbeispiele der vorliegenden Erfindung eine Vorrichtung zum Zuordnen eines aktuellen Messwerts für eine geographische Position zu einem Kartenobjekt einer geographischen Karte, wobei der aktuelle Messwert aus einer Reihe benachbarter Messwerte für benachbarte geographische Positionen stammt, mit einem Prozessor zum Bestimmen eines ersten Wahrscheinlichkeitsmaßes, das angibt, ob der aktuelle Messwert einem ersten Kartenobjekt, dem vorhergehend bereits wenigstens ein benachbarter Messwert aus der Reihe zugeordnet wurde, zugeordnet werden kann, und zum Bestimmen eines zweiten Wahrscheinlichkeitsmaßes, das angibt, ob der aktuelle Messwert einem zweiten Kartenobjekt, welches einen Schnittpunkt mit dem ersten Kartenobjekt aufweist, zugeordnet werden kann, falls das erste Wahrscheinlichkeitsmaß angibt, dass eine Zuordnung des aktuellen Messwerts zu dem ersten Kartenobjekt unwahrscheinlich ist.

Dabei können Messpunkte verschiedenen Kartenobjekten zugeordnet werden. Im Outdoor-Bereich werden beispielsweise Straßen, Plätze, Gassen und im Indoor-Bereich Gänge, Räume, Stockwerke, Wände usw. als Polygone, bestehend aus abschnittsweise definierten Geraden, modelliert. Das heißt, sämtliche Kartenobjekte umfassen wiederum zumindest abschnittsweise geradenförmige Kartenobjekte.

Des weiteren schaffen Ausführungsbeispiele der vorliegenden Erfindung eine Vorrichtung zum Verbessern von Referenzdaten, die gemessene Koordinaten einer geografischen Referenzposition und ein der Referenzposition zugeordnetes Referenzmesspaket aufweisen, welches eine an der geographischen Referenzposition ermittelte Referenzsenderkennung und eine elektromagnetische Signaleigenschaft von einem an der Referenzposition zu einem Referenzzeitpunkt empfangbaren Funksender aufweist, mit einem Prozessor zum Anpassen der gemessenen Koordinaten, die tatsächliche Koordinaten der geografischen Referenzposition annähern, an Koordinaten von Kartenobjekten einer geografischen Karte, um verbesserte Koordinaten zu erhalten, die den tatsächlichen Koordinaten der geografischen Referenzposition besser entsprechen als die gemessenen Koordinaten, und zum Zuordnen der verbesserten Koordinaten zu dem Referenzmesspaket.

Ausführungsbeispiele der vorliegenden Erfindung erlauben also eine Zuordnung von geographischen Rohmesswerten, die beispielsweise mit einem GPS-System gemessen wurden, zu Kartenobjekten einer digitalen Karte, wobei die Kartenobjekte wiederum mit exakten Positionsangaben versehen sind. Somit können die ungenauen Rohmesswerte korrigiert und Messfehler kompensiert werden. Die korrigierten Messwerte können dann beispielsweise als Referenzpositionen für eine eingangs bereits beschriebene Datenbasis für WLAN-basierte Lokalisations- bzw. Navigationssysteme verwendet werden.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Vorrichtung zum Zuordnen eines aktuellen Messwerts für eine geographische Position zu einem Kartenobjekt gemäß einem Ausführungsbeispiel der vorliegenden Erfindung;
- Fig. 2: ein Verfahren zum Zuordnen eines aktuellen Messwerts gemäß einem Ausführungsbeispiel der vorliegenden Erfindung;
- Fig. 3: beispielhafte Wahrscheinlichkeitsfunktionen von Teilwahrscheinlichkeiten zur Bestimmung des ersten Wahrscheinlichkeitsmaßes;
- Fig. 4: ein schematisches Flussdiagramm eines Verfahrens zur Bestimmung des ersten Wahrscheinlichkeitsmaßes;
- Fig. 5: Beispiele für Wahrscheinlichkeitsfunktionen von Teilwahrscheinlichkeiten zur Bestimmung des zweiten Wahrscheinlichkeitsmaßes;
- Fig. 6: ein schematisches Flussdiagramm eines Verfahrens zur Bestimmung des zweiten Wahrscheinlichkeitsmaßes gemäß einem Ausführungsbeispiel der vorliegenden Erfindung;
- Fig. 7: eine Darstellung einer Möglichkeit, ein richtiges Kartenobjekt zu finden, wenn ein vorhergehender Zuordnungsversuch fehlgeschlagen ist; und
- Fig. 8: eine Vorrichtung Verbessern von Referenzdaten gemäß einem Ausführungsbeispiel der vorliegenden Erfindung.

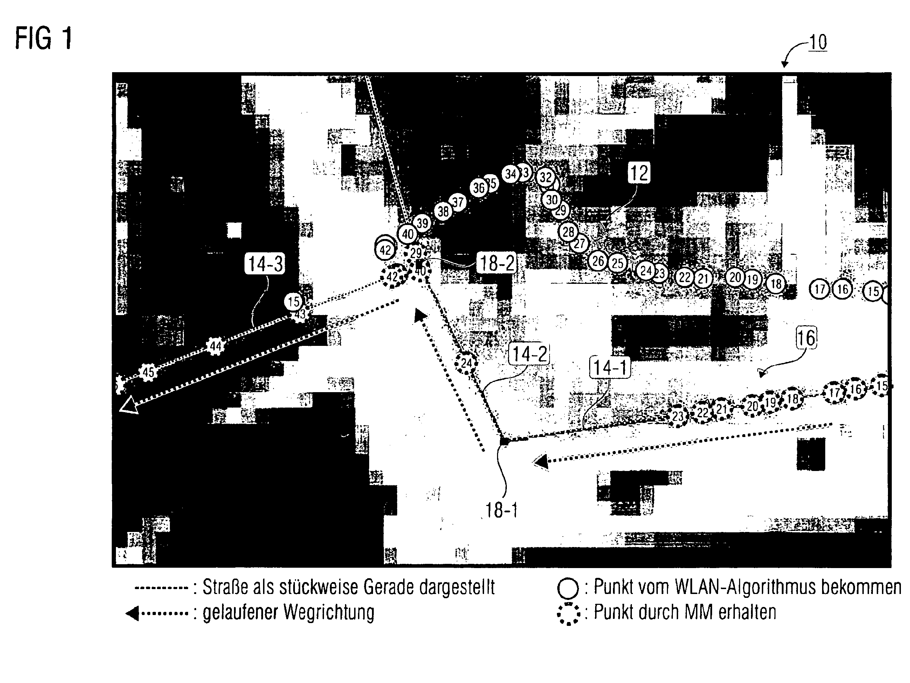

Fig. 1 zeigt einen (stark vergrößerten) Bereich einer digitalen Karte 10.

In der Karte 10 ist eine Reihe benachbarter Rohmesswerte 12 für geographische Positionen gezeigt. Diese Messwerte 12 wurden entlang eines tatsächlich begangenen Weges bestimmt, der in Fig. 1 durch die gepunkteten Pfeile gekennzeichnet ist. Tatsächlich wurden die Messwerte 12 also entlang von Straßenabschnitten aufgezeichnet, die in der Karte 10 als abschnittsweise geradenförmige Kartenobjekte 14 dargestellt sind. Die Straßenabschnitte schneiden sich in Schnittpunkten 18-1, 18-2. Es lässt sich gut erkennen, dass die gemessenen Positionen 12 den tatsächlichen geographischen Positionen, die sich ja schließlich auf den Straßenabschnitten 14 befinden, nur sehr ungenau entsprechen. Daher ist es für verschiedene Anwendungen erforderlich, jeden der gemessenen Punkte 12 einer jeweils richtigen Straße 14-1, 14-2 oder 14-3 zuzuordnen.

Würde man auf naheliegende Weise bezüglich eines kürzesten Abstands eines Messpunkts zur jeweiligen Straße eine senkrechte Projektion durchführen, so würde man nur ein recht unzureichendes Abgleich- bzw. Matching-Ergebnis erhalten, wie es durch die projizierten Punkte 16 auf den zumindest abschnittsweise geradenförmigen Kartenobjekten 14-1, 14-2 und 14-3 dargestellt ist.

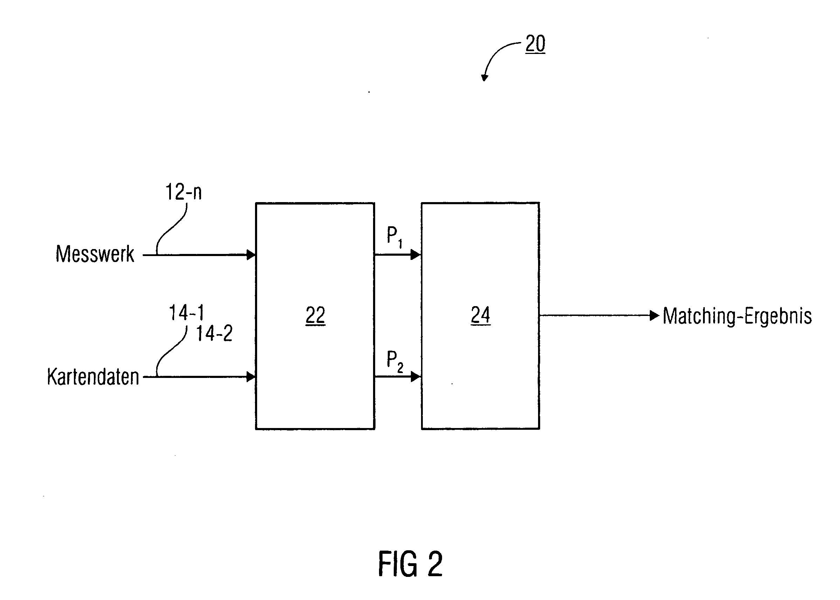

Daher werden Gemäß Ausführungsbeispielen der vorliegenden Erfindung Regeln aufgestellt, um den Messpunkten 12 jeweils die richtigen Kartenobjekte 14 zuzuordnen, wie es im Nachfolgenden anhand der Fig. 2 - 8 näher beschrieben wird.

Fig. 2 zeigt schematisch ein Blockdiagramm einer Vorrichtung 20 zum Zuordnen eines aktuellen Messwerts 12-n für eine geographische Position zu einem Kartenobjekt 14 einer geographischen Karte, wobei der aktuelle Messwert 12-n aus einer Reihe benachbarter Messwerte 12-1, ..., 12-N für benachbarte geographische Positionen stammt, d.h. n = 1,2,...,N. Der Index n bedeutet also quasi Zuordnungszeitpunkte.

Die Vorrichtung 20 weist einen Prozessor 22 auf zum Bestimmen eines ersten Wahrscheinlichkeitsmaßes P₁, das angibt, ob der aktuelle Messwert 12-n zu einem ersten zumindest abschnittsweise geradenförmigen Kartenobjekt 14-1, dem vorhergehend bereits wenigstens ein benachbarter bzw. vorhergehender Messwert 12-1,...,12-(n-1) aus der Reihe zugeordnet wurde, zugeordnet werden kann. Der Prozessor 22 dient ferner zum Bestimmen eines zweiten Wahrscheinlichkeitsmaßes P₂, das angibt, ob der aktuelle Messwert 12-n einem zweiten zumindest abschnittsweise geradenförmigen Kartenobjekt, welches einen Schnittpunkt 18 mit dem ersten Kartenobjekt 14-1 aufweist, zugeordnet werden kann, falls das erste Wahrscheinlichkeitsmaß P₁ angibt, dass eine Zuordnung des aktuellen Messwerts 12-n zu dem ersten Kartenobjekt 14-1 unwahrscheinlich ist.

Das erste Wahrscheinlichkeitsmaß P₁, welches also dem ersten Kartenobjekt 14-1 zugeordnet ist, gibt an, wie wahrscheinlich es ist, dass der aktuelle Messpunkt 12-n tatsächlich dem ersten Kartenobjekt 14-1 (z. B. eine erste Straße) zugeordnet werden kann. Das zweite Wahrscheinlichkeitsmaß P₂ ist dem zweiten Kartenobjekt 14-2, d. h. also beispielsweise einer zweiten Straße, zugeordnet und gibt an, wie wahrscheinlich es ist, dass der aktuelle Messpunkt 12-n diesem zweiten Kartenobjekt 14-2 zugeordnet werden kann. Ausführungsbeispiele der vorliegenden Erfindung lassen sich also bevorzugt dazu einsetzen, um an kritischen Positionen, wie z. B. Straßenkreuzungen, zu bestimmen, ob eine Wegänderung (z. B. Straßenwechsel), und wenn ja, wohin, erfolgt ist. Dazu werden erfindungsgemäß Regeln aufgestellt, um das erste und/oder das zweite Wahrscheinlichkeitsmaß P₁, P₂ zu bestimmen. P₁ und P₂ können dann einer Auswahleinrichtung 24 zugeführt werden, die basierend auf den Wahrscheinlichkeitsmaßen P₁ und P₂ letztlich ein Kartenobjekt auswählt, welchem der aktuelle Messpunkt 12-n zugeordnet wird.

Zunächst soll die Bestimmung des ersten Wahrscheinlichkeitsmaßes P₁ näher beleuchtet werden.

Gemäß Ausführungsbeispielen der vorliegenden Erfindung werden zur Bestimmung des ersten Wahrscheinlichkeitsmaßes P₁ verschiedene Teilwahrscheinlichkeitsmaße bzw. Zuordnungswahrscheinlichkeiten bestimmt, die dann zum Wahrscheinlichkeitsmaß P₁ verknüpft werden.

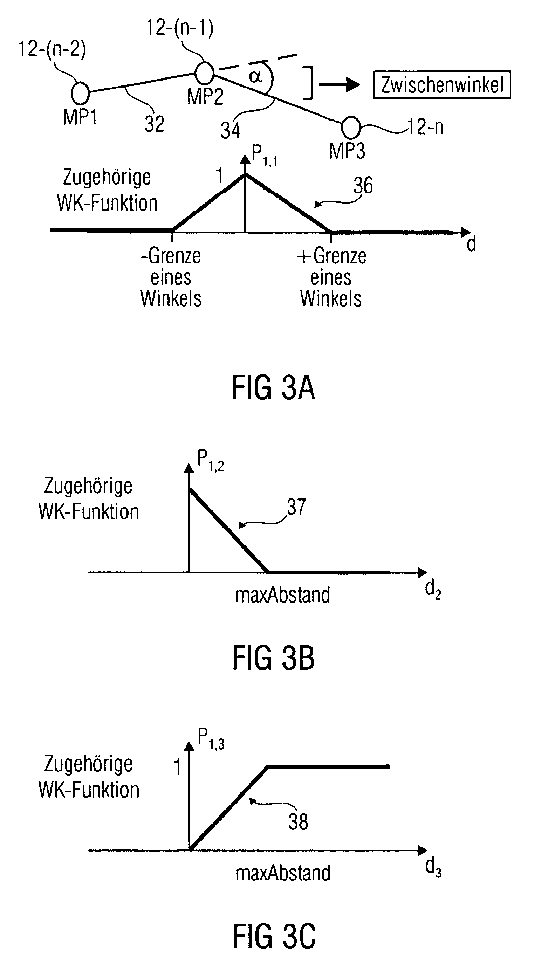

Die Ermittlung einer ersten Zuordnungswahrscheinlichkeit P_{1,1} wird anhand von Fig. 3a verdeutlicht.

In Fig. 3a dargestellt sind ein aktueller Messpunkt 12-n und zwei benachbarte, vorhergehende Messwerte 12-(n-1) und 12-(n-2). Es wird davon ausgegangen, dass die beiden benachbarten Messwerte bereits dem ersten Kartenobjekt 14-1, z. B. in Form einer Straße, zugeordnet wurden. Nun gilt es zu entscheiden, ob der aktuelle Messwert 12-n, d. h. der Messwert, der aktuell einem Kartenobjekt zugeordnet werden soll, ebenfalls dem ersten Kartenobjekt 14-1 zugeordnet wird, oder ob er einem zweiten zumindest abschnittsweise geradenförmigen Kartenobjekt 14-2, das das erste Kartenobjekt 14-1 schneidet, zugeordnet wird. Diese Frage stellt sich beispielsweise bei Querstraßen oder Straßenkreuzungen in der Nähe des aktuellen Messpunktes 12-n, aber auch bei anderen durch Polygone modellierten Kartenobjekten.

Der Prozessor 22 ist gemäß Ausführungsbeispielen ausgebildet, um für den aktuellen Messwert 12-n die erste Zuordnungswahrscheinlichkeit P_{1,1} hinsichtlich des ersten Kartenobjektes 14-1 derart zu ermitteln, dass sie abhängig davon ist, wie stark der aktuelle Messwert 12-n von einer durch die wenigstens zwei vorhergehenden Messwerte 12-(n-2), 12-(n-1) definierten (Ausgleichs-) Gerade 32 abweicht. Dazu kann gemäß Fig. 3a eine Gerade 34 durch den aktuellen Messwert 12-n und den vorhergehenden Messwert 12-(n-1) gelegt werden, die die Gerade 32 unter einem Winkel α schneidet. Je kleiner der Winkel α zwischen den beiden Geraden 32 und 34 ausfällt, d.h. je kleiner die Abweichung des aktuellen Messwerts 12-n von dem durch die vorhergehenden Messwerte 12-(n-2), 12-(n-1) prädizierten Weges ist, desto größer ist die Wahrscheinlichkeit, dass der aktuelle Messwert 12-n, ebenso wie die vorhergehenden Messwerte 12-(n-2) und 12-(n-1), dem ersten zumindest abschnittsweise geradenförmigen Kartenobjekt 14-1 zugeordnet werden kann. Dabei werden hier lediglich exemplarisch nur zwei benachbarte Messwerte 12-(n-2), 12-(n-1) betrachtet. Eine größere Anzahl benachbarter Messwerte ist ein Designparameter und damit ebenso möglich.

D.h., je kleiner der Zwischenwinkel α bzw. die Abweichung von der Geraden 32, desto größer wird die erste Zuordnungswahrscheinlichkeit P_{1,1} ausfallen. Dies ist schematisch durch die exemplarische Wahrscheinlichkeitsfunktion (WK-Funktion) bzw. Wahrscheinlichkeitsdichtefunktion 36 gezeigt. Die erste Zuordnungswahrscheinlichkeit P_{1,1} kann dabei (wie hier gezeigt) entweder direkt über dem Zwischenwinkel α aufgetragen sein, so dass sich deren Wert direkt ablesen lässt. Im Falle einer Wahrscheinlichkeitsdichtefunktion kann sich die erste Zuordnungswahrscheinlichkeit P_{1,1}, aber durch Integration einer Wahrscheinlichkeitsdichte über einen in Frage kommenden Winkelbereich ergeben. Die Bestimmung des Zwischenwinkels α setzt natürlich voraus, dass Koordinaten aufeinanderfolgender Messwerte 12-(n-2), 12-(n-1), 12-n voneinander verschieden sind, d.h., dass aufeinanderfolgende Messwerte eine ständige Bewegung reflektieren. Des Weiteren sollten für die Bestimmung des Zwischenwinkels α auch nur aufeinanderfolgende Messwerte herangezogen werden, die einen gewissen Mindestabstand voneinander aufweisen, da es sonst zu unplausiblen Ergebnissen kommen kann. Dazu kann gemäß Ausführungsbeispielen vorgesehen sein, Bewegungsstillstände oder zu langsame Bewegungen im Hinblick auf die Zuordnung eines aktuellen Messwerts zu erkennen und entsprechend ähnliche aufeinanderfolgende Messwerte für die Bestimmung der ersten Zuordnungswahrscheinlichkeit P_{1,1} auszuklammern oder entsprechend zu berücksichtigen.

Es soll betont werden, dass die in Fig. 3a dargestellte Wahrscheinlichkeitsfunktion 36, ebenso wie die noch folgenden Wahrscheinlichkeitsfunktionen, lediglich exemplarisch gemeint sind und demnach natürlich auch anders verlaufen können. Sie sollen lediglich qualitativ skizzieren, wie die einzelnen Zuordnungswahrscheinlichkeiten gebildet werden können.

Gemäß Ausführungsbeispielen ist der Prozessor 22 ferner ausgebildet, um für den aktuellen Messwert 12-n eine zweite Zuordnungswahrscheinlichkeit P_{1,2} hinsichtlich des ersten Kartenobjekts 14-1 zu ermitteln, die abhängig davon ist, wie weit der aktuelle Messwert 12-n von dem ersten Kartenobjekt 14-1 entfernt ist. Dazu kann eine Entfernung d₂ durch eine orthogonale Projektion des aktuellen Messwerts 12-n, d.h. dessen Koordinaten, auf das geradenförmige erste Kartenobjekt 14-1 durchgeführt werden. Der Abstand d₂ zwischen dem auf das Kartenobjekt projizierten Messwert und dem aktuellen Messwert 12-n bedeutet dann den besagten Abstand zwischen aktuellem Messwert 12-n und erstem Kartenobjekt 14-1. Ob der Abstand d₂ durch Heranziehen von geographischen Längen- und Breitenangaben oder mittels beispielsweise kartesischer Koordinaten bestimmt wird, ist dabei unerheblich.

Eine mögliche Wahrscheinlichkeitsfunktion 37 bezüglich der zweiten Zuordnungswahrscheinlichkeit P_{1,2} ist beispielhaft in Fig. 3b gezeigt. Prinzipiell lässt sich erkennen, dass die Zuordnungswahrscheinlichkeit P_{1,2} um so größer ist, je näher der aktuelle Messwert 12-n an dem ersten Kartenobjekt 14-1 bzw. der ersten Straße ist, welcher auch schon die letzten Messwerte zugeordnet wurden. Auch hier kann die tatsächlich verwendete Wahrscheinlichkeits- (Dichte-) Funktion wieder anders aussehen.

Bei Ausführungsbeispielen der vorliegenden Erfindung wird das erste Wahrscheinlichkeitsmaß P₁ durch Hinzuziehen einer weiteren, dritten Zuordnungswahrscheinlichkeit P_{1,3} ermittelt. Dazu ist der Prozessor 22 ausgebildet, um für den aktuellen Messwert 12-n die dritte Zuordnungswahrscheinlichkeit P_{1,3} hinsichtlich des ersten Kartenobjekts 14-1 derart zu ermitteln, dass sie davon abhängt, wie weit der aktuelle Messwert 12-n von dem Schnittpunkt 18 des ersten Kartenobjekts 14-1 mit dem zweiten Kartenobjekt 14-2 entfernt ist. Diese Entfernung sei nachfolgend mit d₃ bezeichnet. d₃ bedeutet also beispielsweise den Abstand zum nächstmöglichen Straßeneck. Je weiter der aktuelle Messwert 12-n bzw. dessen zugehörige geographische Position von dem Schnittpunkt 18 entfernt ist, desto unwahrscheinlicher ist es, dass der aktuelle Messwert 12-n dem zweiten Kartenobjekt 14-2 zuzuordnen ist. Umgekehrt bedeutet dies, dass es umso wahrscheinlicher ist, dass der aktuelle Messwert 12-n dem ersten Kartenobjekt 14-1 zuzuordnen ist, je größer d₃ ist. Dieser Zusammenhang ist exemplarisch anhand der in Fig. 3c dargestellten Wahrscheinlichkeitsfunktion 38, die natürlich wieder anders aussehen könnte, gezeigt.

Aus den drei Zuordnungswahrscheinlichkeiten P_{1,1}, P_{1,2} und P_{1,3} kann nun das erste Wahrscheinlichkeitsmaß P₁ bestimmt werden, beispielsweise gemäß P₁ = f(P_{1,1}, P_{1,2}, P_{1,3}) = P_{1,1}·P_{1,2}·P_{1,3}. Da jede der Zuordnungswahrscheinlichkeiten zwischen 0 und 1 liegt, wird auch das erste Wahrscheinlichkeitsmaß P₁ zwischen 0 und 1 liegen, d.h. 0 ≤ P₁ ≤ 1. Im Falle eine Stillstandsdetektion, d.h. für den Fall dass der aktuelle Messpunkt sehr ähnlich bzw. gleich vorhergehenden Messpunkten ist, könnte beispielsweise P_{1,1} = 1 gewählt werden, um die in diesem Falle unzuverlässige erste Zuordnungswahrscheinlichkeit P_{1,1} auszuklammern (da Zwischenwinkel α nicht zuverlässig bestimmt werden kann).

Ist das erste Wahrscheinlichkeitsmaß P₁ ermittelt worden, so kann es mit einem ersten Schwellwert X₁ verglichen werden. Liegt das erste Wahrscheinlichkeitsmaß oberhalb des ersten Schwellwerts (z.B. X₁ ≤ P₁), so wird der aktuelle Messwert dem ersten Kartenobjekt 14-1 zugeordnet. Dies kann beispielsweise ebenfalls durch eine orthogonale Projektion der gemessenen Koordinaten auf das geradenförmige erste Kartenobjekt 14-1 geschehen. Andere Abbildungsvorschriften sind natürlich ebenfalls denkbar.

Liegt das erste Wahrscheinlichkeitsmaß P₁ unterhalb des ersten Schwellwerts X₁ (z.B. P₁ ≤ X₁), so ist davon auszugehen, dass der aktuelle Messwert 12-n eher nicht dem ersten Kartenobjekt 14-1 zuzuordnen ist, sondern vielmehr dem zweiten Kartenobjekt 14-2. Es hat in dem Fall also beispielsweise ein Straßenwechsel von der ersten Straße auf eine zweite Straße (Querstraße) stattgefunden.

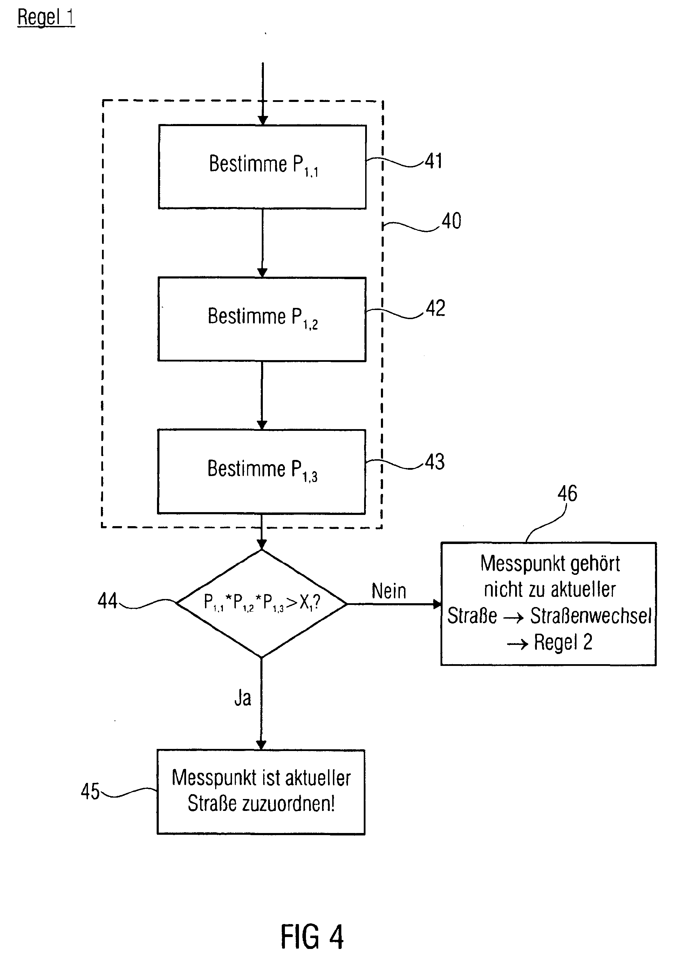

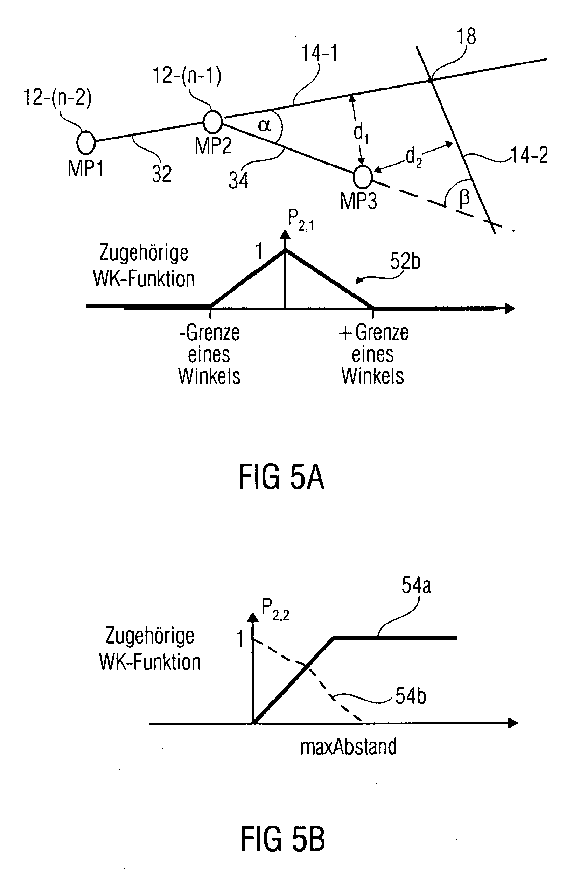

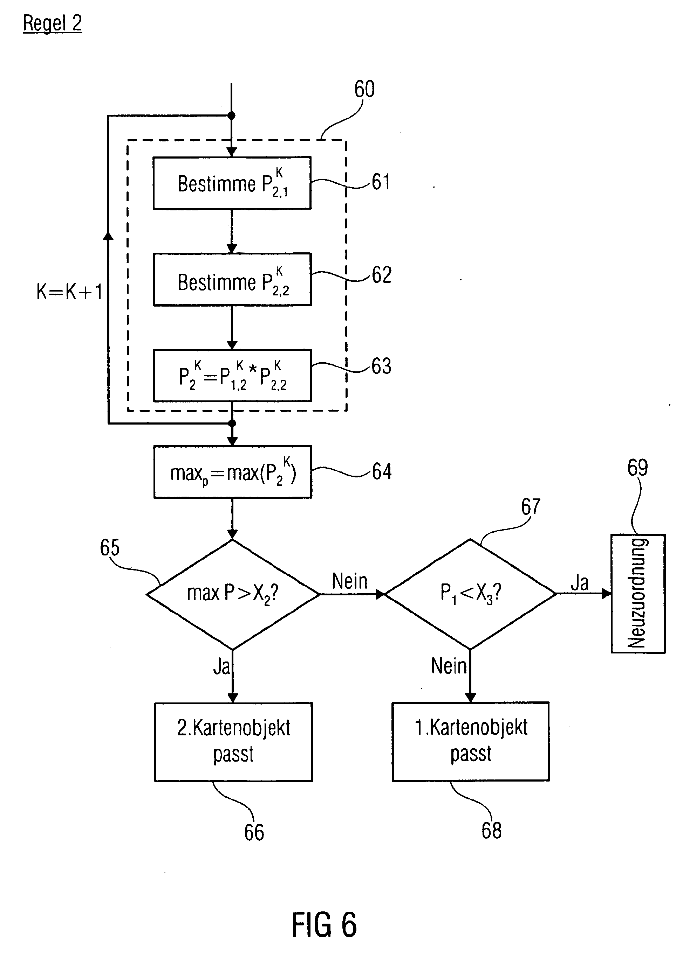

Bevor anhand der Fig. 5 und 6 erläutert wird, wie die Zuordnung des aktuellen Messwerts 12-n zu dem zweiten Kartenobjekt wahrscheinlichkeitsmäßig abgesichert werden kann, soll nachfolgend anhand der Fig. 4 noch einmal die Regel zur Bestimmung des ersten Wahrscheinlichkeitsmaßes P₁ zusammengefasst werden.

In einem Schritt 40 wird das erste Wahrscheinlichkeitsmaß P₁ bestimmt, das angibt, ob der aktuelle Messwert 12-n einem ersten zumindest abschnittsweise geradenförmigen Kartenobjekt 14-1, dem vorhergehend bereits wenigstens ein benachbarter Messwert aus der Reihe zugeordnet wurde, zugeordnet werden kann. Wie vorhergehend bereits erläutert wurde, kann der Schritt 40 eingeteilt werden in drei Unterschritte.

In einem ersten Unterschritt 41 wird die erste Zuordnungswahrscheinlichkeit P_{1,1}, wie oben erklärt wurde, ermittelt. In darauffolgenden Unterschritten 42, 43 werden weiterhin die zweite und die dritte Zuordnungswahrscheinlichkeit P_{1,2} und P_{1,3} bestimmt, so wie es bereits erklärt wurde.

In einem weiteren Schritt 44 wird das erste Wahrscheinlichkeitsmaß P₁, zusammengesetzt aus den drei Zuordnungswahrscheinlichkeiten P_{1,1}, P_{1,2} und P_{1,3}, gegen den ersten Schwellwert X₁ verglichen.

Ergibt der Vergleich 44, dass das erste Wahrscheinlichkeitsmaß P₁ größer ist als der erste Schwellwert X₁, so wird der aktuelle Messwert 12-n beispielsweise der aktuellen Straße, d. h. dem ersten geradenförmigen Kartenobjekt 14-1, in einem Schritt 45 zugeordnet.

Ergibt der Vergleich 44 hingegen, dass das erste Wahrscheinlichkeitsmaß P₁ nicht ausreichend hoch ist, so gehört das aktuelle Messwert 12-n wahrscheinlich nicht zu dem ersten Kartenobjekt 14-1, sondern es wird geprüft, ob es dem zweiten Kartenobjekt 19-2 zugeordnet werden kann (Schritt 46). Dies erfolgt durch Bestimmung des zweiten Wahrscheinlichkeitsmaßes P₂, welche im Folgenden näher erläutert wird.

Fig. 5a zeigt eine Anordnung von benachbarten Messpunkten 12-(n-2), 12-(n-1), 12-n, wie Fig. 3a.

Eine vierte Zuordnungswahrscheinlichkeit P_{2,1} hinsichtlich des zweiten Kartenobjekts 14-2 kann gemäß Ausführungsbeispielen abhängig von einem Zwischenwinkel β zwischen der Geraden 34 und dem zweiten zumindest abschnittsweise geradenförmigen Kartenobjekt 14-2 gemacht werden. Je kleiner dieser Zwischenwinkel β ist, desto "paralleler" sind Kartenobjekt 14-2 und Gerade 34 und desto größer ist die vierte Zuordnungswahrscheinlichkeit P_{2,1} hinsichtlich der Zuordnung des aktuellen Messpunkts zu dem zweiten Kartenobjekt. Dieser Zusammenhang ist exemplarisch durch die schematische Wahrscheinlichkeitsfunktion 52b verdeutlicht.

Des weiteren kann der Prozessor 22 ausgebildet sein, um für den aktuellen Messwert 12-n eine fünfte Zuordnungswahrscheinlichkeit P_{2,2} hinsichtlich des zweiten Kartenobjekts 14-2 zu ermitteln, die beispielsweise abhängig davon sein kann, wie weit der aktuelle Messwert 12-n von dem ersten Kartenobjekt 14-1 entfernt ist (d₁). Die fünfte Zuordnungswahrscheinlichkeit P_{2,2} kann insbesondere dann auf diese Art bestimmt werden, wenn das erste Kartenobjekt 14-1 in einem interessierenden Umkreis von dem aktuellen Messwert 12-n von lediglich einem zweiten zumindest abschnittsweise geradenförmigen Kartenobjekt 14-2 geschnitten wird. Bei mehreren infrage kommenden zweiten zumindest abschnittsweise geradenförmigen Kartenobjekten 14-2 liefert diese Vorgehensweise jedoch keine vernünftigen Aussagen. Eine zu der eben beschriebenen fünften Zuordnungswahrscheinlichkeit P_{2,2} führende Wahrscheinlichkeitsfunktion 54a ist schematisch in Fig. 5b gezeigt. Aus der Wahrscheinlichkeitsfunktion 54a wird deutlich, dass die fünfte Zuordnungswahrscheinlichkeit P_{2,2} um so größer ist, je größer die Entfernung d₁ des aktuellen Messwerts von dem ersten Kartenobjekt 14-1 ist. Gemäß einem bevorzugten Ausführungsbeispiel ist der Prozessor 22 ausgebildet, um für den aktuellen Messwert 12-n die fünfte Zuordnungswahrscheinlichkeit P_{2,2} hinsichtlich des zweiten Kartenobjekts 14-2 zu ermitteln, die davon abhängig ist, wie weit der aktuelle Messwert 12-n von dem zweiten Kartenobjekt 14-2 entfernt ist (d₂). Dies ist gegenüber der oben beschriebenen Alternative insbesondere bei mehreren infrage kommenden zweiten zumindest abschnittsweise geradenförmigen Kartenobjekten 14-2 vorteilhaft. Entsprechend ist dann die fünfte Zuordnungswahrscheinlichkeit P_{2,2} (Bezugszeichen 54b) um so größer, je kleiner die Entfernung d₂ des aktuellen Messwerts 12-n von dem jeweils zweiten Kartenobjekt 14-2 ist. Eine Kombination der beiden zuvor beschriebenen Methoden zur Bestimmung von P_{2,2} ist natürlich ebenfalls möglich, so dass P_{2,2} direkt proportional zu d₁ und gleichzeitig indirekt proportional zu d₂ ist.

Gemäß Ausführungsbeispielen der vorliegenden Erfindung wird das zweite Wahrscheinlichkeitsmaß P₂ basierend auf der vierten und fünften Zuordnungswahrscheinlichkeit bestimmt, d. h. P₂ = f(P_{2,1}, P_{2,2}). Insbesondere kann P₂ gemäß P₂ = P_{2,1}·P_{2,2} ermittelt werden.

Da es zu einer Straße in Form des ersten Kartenobjekts 14-1 für gewöhnlich nicht nur eine Querstraße (in Form des zweiten Kartenobjekts 14-2), sondern davon eine Mehrzahl gibt, wird das zweite Wahrscheinlichkeitsmaß P₂ für jede in Frage kommende Querstraße zu der aktuellen Straße bestimmt. In Frage kommende Querstraßen, d. h. zweite Kartenobjekte, können dabei in einen vorbestimmten geographischen Umkreis, der von der zu erwartenden Messgenauigkeit des aktuellen Messpunkts abhängt, um die aktuelle Messposition 12-n bestimmt werden. Für den Fall, dass K zweite Kartenobjekte in Frage kommen, werden also K zweite Wahrscheinlichkeitsmaße P₂^{k} (k=1,...,K) jeweils für jedes der K zweiten Kartenobjekte bestimmt. Das wahrscheinlichste zweite Kartenobjekt ergibt sich gemäß Ausführungsbeispielen durch eine Maximalwertbildung über die K zweiten Wahrscheinlichkeitsmaße P₂^{k} (k=1,...,K). D.h., es wird das k-te zweite Kartenobjekt ausgewählt, für das gilt: maxP₂ = P₂^{k} = max (P₂¹, ... P₂^{K}).

Falls nun das ausgewählte zweite Wahrscheinlichkeitsmaß maxP₂ größer ist als ein zweiter Schwellwert X₂, so wird davon ausgegangen, dass der aktuelle Messwert 12-n dem ausgewählten zweiten Kartenobjekt, welches zu maxP₂ gehört, zuzuordnen ist. Fällt maxP₂ jedoch unter den zweiten Schwellwert X₂, so wird für den aktuellen Messwert 12-n noch einmal das erste Wahrscheinlichkeitsmaß P₁ betrachtet. Ist das erste Wahrscheinlichkeitsmaß P₁ über einem dritten Schwellwert X₃, der kleiner ist als der erste Schwellwert E₁, so wird der aktuelle Messwert 12-n trotzdem dem ersten Kartenobjekt 14-1 zugeordnet. Liegt das erste Wahrscheinlichkeitsmaß P₁ jedoch unterhalb des dritten Schwellwerts X₃, so wird davon ausgegangen, dass unter Umständen bereits bei der Zuordnung der letzten Messwerte 12-(n-1), 12-(n-2) etwas "schief" gelaufen ist. In diesem Fall muss eine Platzierung bzw. Zuordnung des aktuellen Messwerts 12-n von Neuem erfolgen.

Bevor jedoch darauf eingegangen wird, soll anhand von Fig. 6 noch einmal die Bestimmung des zweiten Wahrscheinlichkeitsmaßes P₂ zusammengefasst werden.

Fig. 6 zeigt einen Schritt 60 des Bestimmens des zweiten Wahrscheinlichkeitsmaßes P₂, das angibt, ob der aktuelle Messwert 12-n dem zweiten, zumindest abschnittsweise geradenförmigen Kartenobjekt 14-2, welches einen Schnittpunkt 18 mit dem ersten Kartenobjekt 14-1 aufweist, zugeordnet werden kann, falls das erste Wahrscheinlichkeitsmaß P₁ angibt, dass eine Zuordnung des aktuellen Messwerts 12-n zu dem ersten Kartenobjekt 14-1 unwahrscheinlich ist.

Der Schritt 60 kann, wie vorhergehend beschrieben wurde, für eine Mehrzahl von in Frage kommenden zweiten Kartenobjekten durchgeführt werden, wie es durch den Rückführungspfad angedeutet ist. Des weiteren kann der Schritt 60 in Unterschritte 61, 62 und 63 untergliedert werden. In einem ersten Unterschritt 61 wird die vierte Zuordnungswahrscheinlichkeit P_{2,1}^{k} für jedes der in Frage kommenden zweiten Kartenobjekte bestimmt. In dem Unterschritt 62 wird gemäß Ausführungsbeispielen die fünfte Zuordnungswahrscheinlichkeit P_{2,2}^{k} ermittelt.

Aus der vierten und fünften Zuordnungswahrscheinlichkeit P_{2,1}^{k}, P_{2,2}^{k} wird in dem dritten Unterschritt 63 das zweite Wahrscheinlichkeitsmaß P₂^{k} errechnet. Die Schritte 61, 62 und 63 werden, wie gesagt, für jedes in Frage kommende zweite Kartenobjekt k (k=1,...,K) durchgeführt, so dass einem Schritt 64 K zweite Wahrscheinlichkeitsmaße zur Maximalwertbildung zugeführt werden können. Ist der Maximalwert maxP₂ bestimmt, so wird dieser in einem Schritt 65 mit dem zweiten Schwellwert X₂ verglichen. Liegt der maximale Wahrscheinlichkeitswert maxP₂ oberhalb des zweiten Schwellwerts X₂, so kann in einem Schritt 66 der aktuelle Messwert 12-n demjenigen zweiten Kartenobjekt 14-2 zugeordnet werden, zu dem maxP₂ gehört.

Liegt der maximale Wahrscheinlichkeitswert maxP₂ jedoch unterhalb des zweiten Schwellwerts X₂, so wird für den aktuellen Messwert 12-n noch einmal eine Betrachtung des ersten Wahrscheinlichkeitsmaßes P₁ durchgeführt, wobei das erste Wahrscheinlichkeitsmaß P₁ gegen einen dritten Schwellwert X₃ < X₁ verglichen wird. Ergibt dieser Vergleich 67, dass das erste Wahrscheinlichkeitsmaß P₁ oberhalb des dritten Schwellwerts X₃ liegt, so kann der aktuelle Messwert 12-n dem ersten Kartenobjekt 14-1 zugeordnet werden (Schritt 68).

Ergibt der Vergleich 67 jedoch, dass das erste Wahrscheinlichkeitsmaß P₁ unterhalb des dritten Schwellwerts X₃ liegt, so ist die Wahrscheinlichkeit groß, dass bei der Zuordnung der letzten Messwerte 12-(n-1), 12-(n-2) bereits eine Falschaussage gemacht wurde. In diesem Fall findet gemäß Ausführungsbeispielen eine Neuzuordnung 69 für den aktuellen Messwert 12-n statt. Diese Neuzuordnung 69 soll im Nachfolgenden beschrieben werden.

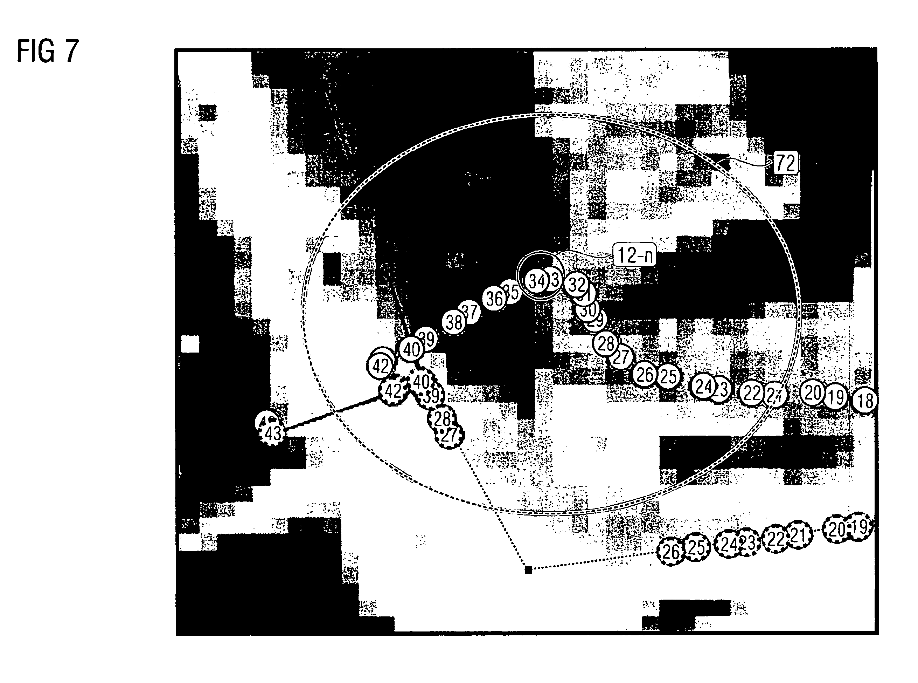

Eine Möglichkeit für eine Neuzuordnung ist schematisch in Fig. 7 gezeigt.

Für den aktuellen Messpunkt 12-n könnte eine Umkreissuche stattfinden. Dazu können in einem vordefinierten geographischen Umkreis 72 um den aktuellen Messwert 12-n Kartenobjekte (z. B. Straßen) abgesucht werden. Dazu könnte der aktuelle Messwert 12-n beispielsweise auf jede Straße in dem Umkreis 72 orthogonal auf die jeweilige Straße abgebildet werden, um eine Entfernung zu der jeweiligen Straße herauszufinden. Diejenige Straße, zu der der aktuelle Messwert 12-n die kleinste Entfernung aufweist, könnte als dasjenige Kartenobjekt ausgewählt werden, welchem der aktuelle Messwert 12-n zugeordnet wird.

Daraufhin wird für die Neuzuordnung des aktuellen Messwerts 12-n ein Wahrscheinlichkeitsmaß entsprechend dem zweiten Wahrscheinlichkeitsmaß P₂ bestimmt, dessen Berechnung bereits anhand der Fign. 5a, 5b und 6 erläutert wurde. D.h., die Gerade 34 durch die Messwerte 12-n, 12-(n-1) wird mit dem neu zuzuordnenden, abschnittsweise geradenförmigen Kartenobjekt 14-2, zu dem der aktuelle Messwert 12-n die kleinste Entfernung aufweist, in Beziehung gesetzt, dahingehend, dass der Zwischenwinkel β zwischen der Geraden 34 durch die Messwerte 12-n, 12-(n-1) und dem neu zuzuordneten Kartenobjekt betrachtet wird. Je kleiner dieser Zwischenwinkel β ist, desto "paralleler" sind neu zugeordnetes Kartenobjekt und Gerade und desto größer ist die Zuordnungswahrscheinlichkeit P_{2,1} hinsichtlich der richtigen Zuordnung des aktuellen Messpunkts 12-n zu dem neu zugeordneten Kartenobjekt. Wie es im Vorhergehenden bereits beschieben wurde, kann für den aktuellen Messwert 12-n eine Zuordnungswahrscheinlichkeit P_{2,2} hinsichtlich des neu zugeordneten Kartenobjekts ermittelt werden, die abhängig davon ist, wie weit der aktuelle Messwert 12-n von dem neu zuzuordnenden Kartenobjekt entfernt ist. Gemäß Ausführungsbeispielen der vorliegenden Erfindung wird das Wahrscheinlichkeitsmaß P₂ für die Neuzuordnung basierend auf der Zuordnungswahrscheinlichkeit P_{2,1} und der Zuordnungswahrscheinlichkeit P_{2,2} bestimmt, d. h. P₂ = f(P_{2,1}, P_{2,2}). Insbesondere kann P₂ gemäß P₂ = P_{2,1}·P_{2,2} ermittelt werden.

Das hier vorgestellte Konzept kann beispielsweise sowohl für Echtzeit- bzw. Quasi-Echtzeit-Navigation verwendet werden, als auch zum nachträglichen Abgleich einer abgefahrenen bzw. abgegangenen Route mit geographischen Referenzdaten (Kartendaten). So kann man sich mit Ausführungsbeispielen der vorliegenden Erfindung beispielsweise anzeigen lassen, welchen Weg man durch eine Stadt, ein Gebäude oder ähnliches genommen hat.

Ausführungsbeispiele der vorliegenden Erfindung lassen sich aber ebenso gut anwenden, um Referenzdaten, die für ein WLAN-basiertes Lokalisations- bzw. Navigationssystem verwendet werden sollen, zu verbessern. Eingangs wurde bereits beschrieben, dass für WLAN-basierte Navigationssysteme Referenzdaten in Form von Referenzmesspaketen, die RF-Fingerabdrücke für geographische Referenzpositionen aufweisen, bestimmt werden müssen. Bei den hier betrachteten WLAN-basierten Ortungssystemen kommt als Basisverfahren das Received-Signal-Strength (RSS) Fingerprinting zum Einsatz. Dieses Verfahren basiert auf der Annahme, dass an einem aktuellen Ort empfangene bzw. empfangbare Signalstärken von Funksignalen mehrerer Funkstationen den aktuellen Ort bzw. die aktuelle Position eindeutig charakterisieren. Existiert eine Referenzdatenbasis, die für eine Anzahl von Referenzorten bzw. Referenzpositionen Senderkennungen von dort zu Referenzzeitpunkten empfangenen bzw. empfangbaren Funkstationen sowie die Signalstärken der entsprechenden Funksignale enthält, so kann aus einem Satz aktueller Messwerte (Senderkennungen und zugehörige Signalstärkenwerte) auf die aktuelle Position geschlossen werden, indem ein Abgleich zwischen aktuell gemessenen Messwerten und den Referenzwerten der Datenbasis erfolgt. Dieser Abgleich - auch Matching bezeichnet- bewertet für jeden Referenzpunkt, wie ähnlich dessen vorher aufgezeichnete Messwerte bzw. Referenzwerte zu den aktuellen Messwerten der aktuellen Position sind. Der oder die ähnlichsten Referenzpunkte bilden dann eine Basis für einen Schätzwert für den aktuellen Aufenthaltsort des mobilen Endgeräts.

Für eine Referenzdatenbasis wird durch eine Referenzmessung die Signalstärke von einem zu einem Referenzmesszeitpunkt an einer Referenzposition empfangbaren Funksender experimentell ermittelt. Dadurch entsteht eine Datenbasis, die zu jeder Referenzposition, an der eine Referenzmessung durchgeführt wurde, eine Liste von Funksendern (Access Points) mit der jeweilig zugeordneten Empfangsfeldstärke und - qualität enthält. Diese Liste kann auch als Referenzpaket bezeichnet werden. Bei einer WLAN-Implementierung kann eine solche Referenzdatenbasis beispielsweise die folgenden Parameter enthalten:

| RID | MAC | RSSI | PGS | X | Y | Z | MAPNR | CREATED |
|---|---|---|---|---|---|---|---|---|
| 1 | 00.0D.54.9E.17.81 | 46530 | 100 | 5795 | 15627 | 150 | 0 | 12.03.07 |
| | | | | | | | | 12:42 |
| 1 | 00.0D.54.9E.1A.BA | 67260 | 90 | 5795 | 15627 | 150 | 0 | 12.03.07 |
| | | | | | | | | 12:42 |
| 1 | 00.0D.54.9E.1D.64 | 72002 | 88 | 5795 | 15627 | 150 | 0 | 12.03.07 |
| | | | | | | | | 12:42 |
| 1 | 00.0E.6A.D3.B9.8B | 59531 | 100 | 5795 | 15627 | 150 | 0 | 12.03.07 |
| | | | | | | | | 12:42 |
| 1 | 00.0F.A3.10.07.6C | 46464 | 96 | 5795 | 15627 | 150 | 0 | 12.03.07 |
| | | | | | | | | 12:42 |
| 1 | 00.0F.A3.10.07.FB | 74488 | 94 | 5795 | 15627 | 150 | 0 | 12.03.07 |
| | | | | | | | | 12:42 |
| 1 | 00.0F.A3.10.09.SF | 72375 | 97 | 5795 | 15627 | 150 | 0 | 12.03.07 |
| | | | | | | | | 12:42 |
| 2 | 00.0D.54.9E.17.81 | 54138 | 100 | 14399 | 15451 | 150 | 0 | 12.03.07 |
| | | | | | | | | 12:43 |
| 2 | 00.0D.54.9E.18.1D | 76560 | 11 | 14399 | 15451 | 150 | 0 | 12.03.07 |
| | | | | | | | | 12:43 |
| 2 | 00.0D.54.9E.1A.BA | 62318 | 94 | 14399 | 15451 | 150 | 0 | 12.03.07 |
| | | | | | | | | 12:43 |
| 2 | 00.0D.54.9E.1D.64 | 71348 | 96 | 14399 | 15451 | 150 | 0 | 12.03.07 |
| | | | | | | | | 12:43 |
| 2 | 00.0E.6A.D3.B9.8B | 45393 | 100 | 14399 | 15451 | 150 | 0 | 12.03.07 |
| | | | | | | | | 12:43 |
| 2 | 00.0F.A3.10.07.6C | 66853 | 96 | 14399 | 15451 | 150 | 0 | 12.03.07 |
| | | | | | | | | 12:43 |
| 2 | 00.0F.A3.10.07.FB | 72251 | 100 | 14399 | 15451 | 150 | 0 | 12.03.07 |
| | | | | | | | | 12:43 |
| 2 | 00.0F.A3.10.09.5F | 70990 | 90 | 14399 | 15451 | 150 | 0 | 12.03.07 |
| | | | | | | | | 12:43 |
| 3 | 00.0D.54.9E.17.B1 | 58291 | 100 | 24583 | 15627 | 150 | 0 | 12.03.07 |
| | | | | | | | | 12:43 |
| 3 | 00.0D.54.9E.18.1D | 78610 | 68 | 24583 | 15627 | 150 | 0 | 12.03.07 |
| | | | | | | | | 12:43 |
| 3 | 00.0D.54.9E.1A.BA | 62153 | 98 | 24583 | 15627 | 150 | 0 | 12.03.07 |
| | | | | | | | | 12:43 |
| 3 | 00.0D.54.9E.1D.64 | 64187 | 90 | 24583 | 15627 | 150 | 0 | 12.03.07 |
| | | | | | | | | 12:43 |
| 3 | 00.0E.6A.D3.B9.8B | 32851 | 100 | 24583 | 15627 | 150 | 0 | 12.03.07 |
| | | | | | | | | 12:43 |
| 3 | 00.0F.A3.10.07.6C | 69006 | 96 | 24583 | 15627 | 150 | 0 | 12.03.07 |
| | | | | | | | | 12:43 |
| 3 | 00.0F.A3.10.07.FB | 71749 | 92 | 24583 | 15627 | 150 | 0 | 12.03.07 |
| | | | | | | | | 12:43 |
| 3 | 00.0F.A3.10.09.5F | 71482 | 83 | 24583 | 15627 | 150 | 0 | 12.03.07 |
| | | | | | | | | 12:43 |
| 3 | 00.0F.A3.10.09.80 | 71000 | 40 | 24583 | 15627 | 150 | 0 | 12.03.07 |
| | | | | | | | | 12:43 |

Dabei enthält die Tabelle die folgenden Informationen:
- die Referenzposition-Identifikation (RID),
- die MAC-Adressen (MAC = Media Access Control) der empfangenen Stationen,
- die Empfangsfeldstärken der Funksender (RSSI (Received Signal Strength Indicator); 46560 bedeutet -46,560 dBm),
- die Referenzposition in kartesischen, metrischen Koordinaten (x, y, z; 24583 bedeutet 245,83 m), sowie
- den Zeitpunkt der Messwertaufnahme.

Die Spalte PGS ("Percentage Seen") gibt an, wie häufig diese Station bei der Messwertaufnahme prozentual gesehen wurde (d. h. PGS = 90 bedeutet, dass im Schnitt die Station bei 9 von 10 Messungen gemessen wurde).

In der oben dargestellten Tabelle entsprechen sämtliche Informationen, die einer Referenzposition-Identifikation (RID) zugeordnet sind, einem Referenzmesspaket. D.h. die obige, exemplarische Tabelle umfasst drei Referenzmesspakete entsprechend drei verschiedenen geografischen Referenzpositionen.

Für die Lokalisierung werden aktuell empfangene Funksender mit ihrer jeweilig zugeordneten Empfangsfeldstärke (Messpaket) mit Referenzpaketen aus der Referenzdatenbasis in einer Abgleichphase verglichen. Referenzpakete mit einer kleinen Distanz zu dem aktuellen Messpaket, d.h. vielen gemeinsamen Funksendern und wenig unterschiedlichen Empfangsfeldstärken, passen gut dem aktuellen Messpaket. Die zu den gut passenden Referenzpaketen gehörigen Referenzpositionen sind sehr wahrscheinlich und gehen in eine Positionsberechnungsphase ein. Die Positionsberechnungsphase berechnet aus den Kandidatenpositionen die Position des mobilen Endgeräts. Das Ergebnis dieser Phase ist ein Schätzwert für die Position des Endgeräts. Die Qualität des Schätzwerts ist u.a. abhängig von der Qualität der Referenzpakete, insbesondere der Referenzpositionen.

Die Referenzpositionen werden dabei beispielsweise mit GPS-Empfängern ermittelt. Wie es ebenfalls beschrieben wurde, sind solche GPS-Empfänger nur bedingt genau. Durch das beschriebene Konzept lassen sich nachträglich die aufgezeichneten Referenzpositionen der gespeicherten Messpakete korrigieren und Kartenobjekten zuordnen, so dass die Genauigkeit der gespeicherten Referenzpositionen in der Datenbank erheblich erhöht werden kann.

Das heißt, Ausführungsbeispiele der vorliegenden Erfindung schaffen also ein Konzept zum Verbessern von Referenzdaten, die gemessene Koordinaten einer geographischen Referenzposition und ein den gemessenen Koordinaten zugeordnetes Referenzmesspaket aufweisen, welches eine an der geographischen Referenzposition ermittelte Referenzsenderkennung und eine elektromagnetische Signaleigenschaft von einem an der Referenzposition zu einem Referenzzeitpunkt empfangbaren Funksender aufweist. Dazu werden die gemessenen Koordinaten, die tatsächlichen Koordinaten der geographischen Referenzposition nur ungenau entsprechen, an Koordinaten von in einer Nähe der gemessenen Koordinaten befindlichen.Kartenobjekten einer geographischen Karte angepasst, um verbesserte Koordinaten zu erhalten, die den tatsächlichen Koordinaten der geographischen Referenzposition besser entsprechen als die gemessenen Koordinaten. Anschließend werden die verbesserten Koordinaten dem Referenzmesspaket zugeordnet.

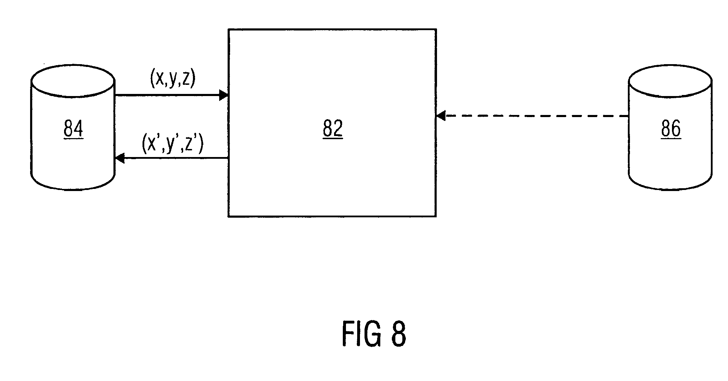

Fig. 8 zeigt dazu einen Prozessor 82, der mit einer Datenbasis 84 gekoppelt ist, um von der Datenbasis 84 Referenzmesspakete, insbesondere Koordinaten (x,y,z) einer geographischen Referenzposition, empfangen zu können.

Der Prozessor 82, der gemäß Ausführungsbeispielen den vorher beschriebenen Prozessor 22 umfasst, ist also angepasst, um die gemessenen Koordinaten (x,y,z), die tatsächlichen Koordinaten der geografischen Referenzposition nur ungenau entsprechen, an Koordinaten von in einer Nähe der gemessenen Koordinaten befindlichen Kartenobjekten 14 einer geografischen Karte anzupassen, um verbesserte Koordinaten (x',y',z') zu erhalten, die den tatsächlichen Koordinaten der geografischen Referenzposition besser entsprechen als die gemessenen Koordinaten, und um die verbesserten Koordinaten (x',y',z') dem Referenzmesspaket zuzuordnen bzw. die gemessenen Koordinaten (x,y,z) durch die verbesserten Koordinaten (x', y', z') zu ersetzen.

Digitale Kartendaten entsprechend den Kartenobjekten können beispielsweise aus einer Kartendatenbank 86 bezogen werden. Dazu kann der Prozessor 82 mit der Kartendatenbank 86 gekoppelt sein, wie es in Fig. 8 angedeutet ist.

Die in der Nähe der gemessenen Koordinaten (x,y,z) befindlichen Kartenobjekte können beispielsweise durch eine Umkreissuche um die gemessenen Koordinaten ermittelt werden. Der Radius des Umkreises ist dabei natürlich von der jeweiligen Anwendung und der Messgenauigkeit abhängig und kann beispielsweise kleiner als 100 m, aber insbesondere kleiner als 30 m sein.

Bei den elektromagnetischen Eigenschaften der Funksignale handelt es sich um mit einer Empfangsfeldstärke in Beziehung stehende Signaleigenschaften, wie z. B. Empfangsfeldstärke, Empfangsleistungsspektrum, Signal-zu-Rauschleistungs-Verhältnis (SNR = Signal-to-Noise Ratio), Einfallswinkel, Laufzeit, Polarisation oder Phasenlage der Funksignale. Bei den Referenzsenderkennung handelt es sich beispielsweise um MAC-Adressen der an der Referenzposition empfangbaren Funksender.

Somit können Referenzpositionen, an denen zugeordnete Referenzmesspakete, d.h. Radiofingerabdrücke von empfangbaren WLAN-Sendern, aufgezeichnet werden, relativ ungenau gemessen werden. Die Messung findet dabei beispielsweise durch Abfahren bzw. Ablaufen beliebiger Wege und durch intervallweise Aufzeichnung der Messpakete entlang dieser Wege statt. Beispielsweise könnte ein Messpaket aller zwei bis 30 Sekunden, je nach Anwendung, aufgezeichnet und in der Datenbank 84 abgelegt werden. Für das Abfahren bzw. Ablaufen könnten beispielsweise Berufskraftfahrer (z.B. Taxifahrer, Busfahrer, etc.) bzw. Postboten oder Fahrradkuriere eingesetzt werden, d.h. Leute, die sowieso täglich in einem bestimmten Areal unterwegs sind, für das es gilt Referenzdaten aufzuzeichnen. Das erlaubt eine relativ unkomplizierte und kostengünstige Erstellung der Referenzdatenbasis 84.

Im Anschluss können die gemessenen Referenzpositionen durch eine Nachbearbeitung (Map-Matching) mittels der vorgestellten Methodik durch den Prozessor 82 an hochgenaue Kartendaten entsprechend der abgefahrenen bzw. abgelaufenen Wege angeglichen werden. Dazu braucht der Prozessor lediglich Zugang zu der Datenbasis 84, in der die Referenzmesspakete samt der gemessenen Referenzpositionen gespeichert sind. Ebenso ist ein Zugang zu entsprechendem hochgenauen Kartenmaterial notwendig, damit der nachträgliche Abgleich erfolgen kann. Die Kartendaten können dazu ebenfalls aus geeigneten Kartendatenbanken 86 abgerufen werden. Dazu kann der Prozessor 82 eine geeignete Schnittstelle, wie z.B. eine Internet-Schnittstelle, aufweisen, um Kartendaten von externen Datenbanken 86 abzurufen. Auch die Referenzdatenbasis 84 kann mittels einer solchen Schnittstelle an den Prozessor 82 koppelbar sein.

Über die Schnittstelle können die gemessenen Koordinaten (x,y,z) von Referenzpositionen der in der Datenbasis 84 gespeicherten Messpakete empfangen werden. Anhand der empfangenen Koordinaten kann eine Bewertung vorgenommen werden, in welchem geographischen Gebiet sich die gemessenen Koordinaten (x,y,z) befinden. Dies ermöglicht den Prozessor 82, von einer mit diesem gekoppelten Kartendatenbasis 86 geographisches Kartenmaterial anhand der gemessenen Koordinaten anzufordern. Derartige Kartendatenbanken 86 sind vielfältig und sogar meist kostenlos verfügbar. Die Kartendaten der (digitalen) Kartendatenbank 86 umfassen dabei hochgenaue geographische Koordinaten der Kartenobjekte, wie z.B. Straßen, Wege oder Gebäude. Aus diesem Grund ist es möglich, die gemessenen Koordinaten mittels des erfindungsgemäßen Konzepts an die hochgenauen Kartendaten durch das hier beschriebene Map-Matching anzupassen. Dieser Abgleich der gemessenen Koordinaten (x,y,z) mit den hochgenauen Kartendaten erfolgt für jede gemessene Position eines Referenzmesspakets. Nach dem erfolgten Abgleich (Map-Matching) können die verbesserten Koordinaten (x',y',z') der Referenzpositionen wieder zurück in die Datenbasis 84 geschrieben werden. Vorzugsweise werden dabei die alten, gemessenen Koordinaten (x,y,z) eines Referenzmesspakets durch die neuen, verbesserten Koordinaten (x',y',z') ersetzt.

D.h., Ausführungsbeispiele der vorliegenden Erfindung können helfen, eine hochgenaue Referenzdatenbasis für Fingerabdruck-basierte Ortungssysteme, wie z.B. WLAN-basierte Ortungssysteme, zu schaffen. Dabei braucht eine Positionsgenauigkeit bei einem Einmessvorgang nicht hochgenau zu sein, so dass dabei auf komplizierte und teure GPS-Empfangsgeräte verzichtet werden kann. Die Genauigkeit der gemessenen Referenzpositionen wird in einem anschließenden Post-Processing durch Abgleich der gemessenen Positionen mit hochgenauen Kartendaten erzielt. Somit schaffen Ausführungsbeispiele eine Möglichkeit zur Nachverarbeitung von gemessenen geographischen Positionen, welche als Referenzpositionen für WLAN-basierte Ortungs- bzw. Navigationgeräte verwendet werden. Durch die geschilderte Nachverarbeitung kann die Qualität der gemessenen geographischen Positionen deutlich verbessert werden und somit auch die Qualität der Positionsangaben, die durch einen Radiofingerabdruckableich bei einem WLAN-basierten System erreicht werden können.

Dort werden schließlich aktuell bestimmte Radiofingerabdrücke mit gespeicherten Radiofingerabdrücken an den Referenzpositionen verglichen und basierend darauf, anhand der Referenzpositionen ein Schätzwert für eine aktuelle geographische Position ermittelt.

Abschließend soll noch darauf hingewiesen werden, dass abhängig von den Gegebenheiten die erfindungsgemäßen Verfahren in Hardware oder in Software implementiert werden können. Die Implementierung kann auf einem digitalen Speichermedium, insbesondere einer Diskette, CD oder DVD mit elektronisch auslesbaren Steuersignalen erfolgen, die so mit einem programmierbaren Computersystem zusammenwirken können, dass das erfindungsgemäße Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Computer und/oder Mikrocontroller abläuft. In anderen Worten ausgedrückt kann die Erfindung somit als ein Computerprogramm mit einem Programmcode zur Durchführung des Verfahrens zum Zuordnen eines aktuellen Messwerts realisiert werden, wenn das Computerprogramm auf einem Computer und/oder Mikrocontroller abläuft.

## Patentansprüche

1. Vorrichtung zum Verbessern von in einer Referenzdatenbasis (84) gespeicherten Referenzdaten, die gemessene Koordinaten einer geografischen Referenzposition und ein der Referenzposition zugeordnetes Referenzmesspaket aufweisen, welches eine an der geographischen Referenzposition ermittelte Referenzsenderkerinung und eine elektromagnetische Signaleigenschaft von einem an der Referenzposition zu einem Referenzzeitpunkt empfangbaren Funksender, aufweist, mit folgenden Merkmalen:
einem Prozessor (82; 22), der ausgebildet ist, um die gemessenen Koordinaten, die tatsächliche Koordinaten der geografischen Referenzposition annähern, an Koordinaten von Kartenobjekten einer geografischen Karte anzupassen, um verbesserte Koordinaten zu erhalten, die den tatsächlichen Koordinaten der geografischen Referenzposition besser entsprechen als die gemessenen Koordinaten, und um in dem in der Referenzdatenbasis (84) gespeicherten Referenzmesspaket die gemessenen Koordinaten der geografischen Referenzposition durch die verbesserten Koordinaten zu ersetzen.

2. Vorrichtung nach Anspruch 1, wobei die elektromagnetischen Signaleigenschaften mit einer Empfangsfeldstärke in Beziehung stehende Signaleigenschaften von Funksignalen sind.

3. Vorrichtung nach Anspruch 1, wobei eine elektromagnetische Signaleigenschaft ein RSSI-Wert, ein Empfangsleistungsspektrum oder ein Signal-zu-Rauschleistungsverhältnis ist.

4. Vorrichtung nach einem der vorhergehenden Ansprüche, wobei die Koordinaten der Kartenobjekte tatsächlichen Koordinaten von den Kartenobjekten zugeordneten Landschaftsobjekten entsprechen.

5. Vorrichtung nach einem der vorhergehenden Ansprüche, wobei die Kartenobjekten (14; 79) Straßen, Wege oder Gebäude darstellen.

6. Verfahren zum Verbessern von in einer Referenzdatenbasis (84) gespeicherten Referenzdaten, die gemessene Koordinaten einer geografischen Referenzposition und ein der Referenzposition zugeordnetes Referenzmesspaket aufweise, welches eine an der geographischen Referenzposition ermittelte Referenzsenderkennung und eine elektromagnetische Signaleigenschaft von einem an der Referenzposition zu einem Referenzzeitpunkt empfangbaren Funksender aufweist, mit folgenden Schritten:
Anpassen der gemessenen Koordinaten, die tatsächliche Koordinaten der geografischen Referenzposition annähern, an Koordinaten von Kartenobjekten einer geografischen Karte, um verbesserte Koordinaten zu erhalten, die den tatsächlichen Koordinaten der geografischen Referenzposition besser entsprechen als die gemessenen Koordinaten; und
Ersetzen der gemessenen Koordinaten der geografischen Referenzposition durch die verbesserten Koordinaten in dem in der Referenzdatenbasis (84) gespeicherten Referenzmesspaket.

7. Computer-Programm zum Ausführen des Verfahrens nach Anspruch 6, wenn das Computer-Programm auf einem Computer oder Mikrocontroller abläuft.

## Claims

1. An apparatus for improving reference data stored in a reference data base (84), comprising measured coordinates of a geographical reference position and a reference measurement packet allocated to the reference position, which comprises a reference transmitter identification determined at the geographical reference position and an electromagnetic signal characteristic of a radio transmitter receivable at the reference position at a reference time, comprising:
a processor (82; 22) implemented to match the measured coordinates approximating actual coordinates of the geographical reference position to coordinates of map objects of a geographical map to obtain improved coordinates corresponding better to the actual coordinates of the geographical reference position than the measured coordinates, and to replace, in the reference measurement packet stored in the reference data base (84), the measured coordinates of the geographical reference position by the improved coordinates.

2. The apparatus according to claim 1, wherein the electromagnetic signal characteristics are signal characteristics of radio signals related to a received field strength.

3. The apparatus according to claim 1, wherein an electromagnetic signal characteristic is an RSSI value, a received power spectrum or a signal-to-noise ratio.

4. The apparatus according to one the previous claims, wherein the coordinates of the map objects correspond to actual coordinates of landscape objects allocated to the map objects.

5. The apparatus according to one of the previous claims, wherein the map objects (14; 79) represent roads, paths or buildings.

6. A method for improving reference data stored in a reference data base (84), comprising measured coordinates of a geographical reference position and a reference measurement packet allocated to the reference position, which comprises a reference transmitter identification determined at the geographical reference position and an electromagnetic signal characteristic of a radio transmitter receivable at the reference position at a reference time, comprising:
matching the measured coordinates approximating actual coordinates of the geographical reference position to coordinates of map objects of a geographical map to obtain improved coordinates corresponding better to the actual coordinates of the geographical reference position than the measured coordinates; and
replacing the measured coordinates of the geographical reference position by the improved coordinates in the reference measurement packet stored in the reference data base (84).

7. A computer program for performing the method of claim 6 when the computer program runs on a computer or a microcontroller.

## Revendications

1. Dispositif pour corriger des données de référence mémorisées dans une base de données de référence (84) qui présentent des coordonnées mesurées d'une position de référence géographique et un paquet de mesure de référence associé à la position de référence qui présente une identification d'émetteur de référence déterminée à la position de référence géographique et une propriété de signal électromagnétique d'un émetteur radio pouvant être reçu à la position de référence à un moment de référence, aux caractéristiques suivantes:
un processeur (82; 22) qui est réalisé pour adapter les coordonnées mesurées qui se rapprochent des coordonnées réelles de la position de référence géographique aux coordonnées d'objets de carte d'une carte géographique, pour obtenir des coordonnées améliorées qui correspondent mieux aux coordonnées réelles de la position de référence géographique que les coordonnées mesurées, et pour remplacer dans le paquet de mesure de référence mémorisé dans la base de données de référence (84) les coordonnées mesurées de la position de référence géographique par les coordonnées améliorées.

2. Dispositif selon la revendication 1, dans lequel les propriétés de signal électromagnétique sont des propriétés de signaux radio en rapport avec une intensité de champ de réception.

3. Dispositif selon la revendication 1, dans lequel une propriété de signal électromagnétique est une valeur RSSI, un spectre de puissances de réception ou un rapport de puissance signal-bruit.

4. Dispositif selon l'une des revendications précédentes, dans lequel les coordonnées des objets de carte correspondent à des coordonnées réelles des objets de paysage associés aux objets de carte.

5. Dispositif selon l'une des revendications précédentes, dans lequel les objets de carte (14; 79) représentent des rues, des chemins ou des édifices.

6. Procédé pour améliorer des données de référence mémorisées dans une base de données de référence (84) qui présentent des coordonnées mesurées d'une position de référence géographique et un paquet mesure de référence associé à la position de référence qui présente une identification d'émetteur de référence déterminée à la position de référence géographique et une propriété de signal électromagnétique d'un émetteur radio pouvant être reçu à la position de référence à un moment de référence, aux étapes suivantes consistant à:
adapter les coordonnées mesurées qui se rapprochent des coordonnées réelles de la position de référence géographique aux coordonnées d'objets de carte d'une carte géographique, pour obtenir des coordonnées améliorées qui correspondent mieux aux coordonnées réelles de la position de référence géographique que les coordonnées mesurées; et
remplacer les coordonnées mesurées de la position de référence géographique par les coordonnées améliorées dans le paquet de mesure de référence mémorisé dans la base de données de référence (84).

7. Programme d'ordinateur pour réaliser le procédé selon la revendication 6, lorsque le programme d'ordinateur est exécuté sur un ordinateur ou microcontrôleur.
